# EUROPÄISCHE PATENTSCHRIFT

(11) **EP 0 642 905 B1**
(45) Veröffentlichungstag und Bekanntmachung des Hinweises auf die Patenterteilung: **04.12.1996**
(21) Anmeldenummer: 94113696.2
(22) Anmeldetag: 01.09.1994
(51) Int. Cl.: B29C 33/60, C08L 91/06, C09D 191/06

(54) **Verfahren zum rückstandsfreien Ablösen von Isocyanat-Holzgemisch-Formkörpern von den Pressplatten einer Pressvorrichtung und hierfür geeignetes Formtrennmittel**
Process for removing, without scrap on the molding surface, of isocyanate bonded lignocellulosic material, and the release agent suitable therefor
Procédé pour détacher, sans laisser de matières résiduelles à la surface des moules, panneaux de fibres avec liant d'isocyanate, et l'agent de démoulage approprié pour ce procédé

(30) Priorität: 09.09.1993 DE 4330455
(43) Veröffentlichungstag der Anmeldung: 15.03.1995
(73) Patentinhaber: BASF Aktiengesellschaft, 67063 Ludwigshafen (DE)
(72) Erfinder: Wittmann, Otto, D-67227 Frankenthal (DE)

(56) Entgegenhaltungen:
- EP-A- 0 223 233
- DE-A- 1 925 675
- DE-A- 2 552 236
- US-A- 4 666 518
- PATENT ABSTRACTS OF JAPAN vol. 5, no. 180 (C-079) 19. November 1981 & JP-A-56 104 964 (SAIDEN KAGAKU K.K.) 21. August 1981

## Beschreibung

Die Erfindung betrifft ein Verfahren zum rückstandsfreien Ablösen von Isocyanat-Holzgemisch-Formkörpern von den Preßplatten oder -formen einer Preßvorrichtung unter Verwendung einer wäßrigen Paraffin-Dispersion sowie ein Formtrennmittel in Form einer wäßrigen Trennlösung, das zur Durchführung des Verfahrens geeignet ist.

Bei der Herstellung von Spanplatten, Faserplatten und Holzformteilen ist für die Trennung des Preßgutes von den Heizplatten, Preßblechen oder Metallformen der Einsatz von Trennmitteln notwendig. Die Adhäsion von Polyisocyanaten, die für die Verklebung des Holzes oder Fasermaterials verwendet werden, ist so groß, daß beim Verpressen ein starker Verbund zwischen Form und Preßgut entsteht.

In der GB-A-2 081 637, der GB-A-2 090 261, der EP-B-0 046 014 und der EP-B-0 057 502 sind eine Vielzahl von Formtrennmitteln auf der Basis von Paraffinen beschrieben. Die praktische Erfahrung hat jedoch gezeigt, daß Formtrennmittel auf der Basis von Paraffinen nicht ausreichend wirksam sind, weil das Paraffin bei der angewendeten Preßtemperatur schmilzt und von der Holzmasse aufgezogen wird.

Man kann auch silikonhaltige Trennmittel einsetzen. Nachteilig hierbei ist jedoch, daß diese sehr teuer sind und sich auch nicht problemlos verarbeiten lassen. Rückstände an der Oberfläche der Preßlinge führen zu Schwierigkeiten bei der Weiterbehandlung der Teile aufgrund von Haft- und Benetzungsproblemen.

Für die Trennung werden nach der DE-A-31 08 538 und der DE-C-31 09 317 auch Phosphorsäurediester empfohlen. Ebenso wurde nach dem Stand der Technik die Verwendung von Alkylbenzolsulfonaten als Additiv zu Methyldiisocyanat-Holzgemischen empfohlen. Versuche haben gezeigt, daß diese Zusätze zwar eine gewisse Wirkung zeigen, jedoch die für eine laufende Produktion notwendige Sicherheit nicht garantieren.

Bei der Herstellung von Span- und Faserplatten wird vorwiegend Roh-Methyldiisocyanat (MDI) in Mengen von 2 bis 7 % - gerechnet auf atro (absolut trockenes) Holz - als Klebstoff eingesetzt. Man verteilt den Klebstoff auf der Oberfläche der Holzteile möglichst homogen. Zur Verminderung der Hygroskopizität und Wasseraufnahme der Platten verwendet man wäßrige Paraffin-Emulsionen, die unmittelbar vor oder nach dem Klebstoffauftrag auf das Holz aufgesprüht werden.

Das Verpressen der Formlinge wird üblicherweise bei 160 bis 230°C und Preßzeiten von 6 bis 15 s/mm Plattendicke vorgenommen. Um ein Festkleben an den Preßplatten, Blechen oder Formen zu vermeiden, versucht man sogar die Decklagen des Preßlings, die unmittelbar mit den Metallflächen in Berührung kommen, mit Holzteilchen abzudecken, die anstelle von MDI mit Amino- oder Phenoplastharzen beharzt wurden.

Diese Arbeitsweise hat den Nachteil, daß in dieser Schicht eine Stelle minderer Festigkeit entsteht. Ferner wird mit diesen Harzen Formaldehyd in die Platte eingebracht, was später zu Geruchsbelästigung führen kann. Man wünscht deshalb den Einsatz von MDI auch in den Decklagen und versucht das Festkleben des Preßlings durch Aufsprühen von Trennmitteln auf die Preßform oder die Oberfläche des Preßlings zu verhindern.

In der DE-A-32 01 111 sind wäßrige Polyisocyanat-Emulsionen als Bindemittel zur Herstellung von Isocyanat-Holzgemisch-Formkörpern beschrieben. Das Bindemittel kann u.a. Katalysatoren als Additiv enthalten. Es werden eine Vielzahl von Katalysatoren vorgeschlagen, u.a. auch Alkalihydroxide. Die vorgeschlagene Isocyanat-Emulsion hat allerdings nicht den Zweck, das Anhaften des Formkörpers an der Preßplatte zu vermindern. Die Druckschrift verweist diesbezüglich auf übliche Trennmittel und benutzt in den Beispielen eine handelsübliche wäßrige Paraffin-Dispersion, die dem Bindemittel zugesetzt wird. Die erfindungsgemäße Kombination aus wäßriger Paraffin-Dispersion und wäßrigem Alkalimetallhydroxid ist in der Druckschrift nicht angesprochen, zumal die Druckschrift das Problem des Formtrennens in den allgemeinen Ausführungen, die mit dem beanspruchten Gegenstand nur unmittelbar zu tun haben, lediglich streift.

Der Erfindung liegt die Aufgabe zugrunde, ein Verfahren zum rückstandsfreien Ablösen von Isocyanat-Holzgemisch-Formkörpern von den Preßplatten oder -formen einer Preßvorrichtung unter Verwendung einer wäßrigen Paraffin-Dispersion zur Verfügung zu stellen, bei dem ein Anhaften des Formkörpers an der Preßplatte vermieden wird. Insbesondere soll sich der Formkörper von der Preßplatte bzw. Preßform so leicht lösen, daß Formling und Preßplatte sich ohne mechanischen Kraftaufwand trennen. Es soll auch ein Formtrennmittel in Form einer wäßrigen Trennlösung zur Verfügung gestellt werden, welches zur Durchführung des Verfahrens geeignet ist.

Diese Aufgabe wird gelöst mit einem Verfahren der eingangs genannten Art, das dadurch gekennzeichnet ist, daß man vor dem Verpressen des Isocyanat-Holzgemischs die Preßplatten oder -Formen und/oder die Oberfläche es Preßlings mit der Paraffin-Dispersion und wäßrigem Alkalimetallhydroxid behandelt.

Das Formtrennmittel enthält 3 bis 10 Gew.-% Alkalimetallhydroxid und 25 bis 60 Gew.-% dispergiertes Paraffin mit Schmelzpunkt von 50 bis 70°C, jeweils bezogen auf das Gesamtgewicht der Trennlösung.

Nach einer bevorzugten Ausführungsform verwendet man beim erfindungsgemäßen Verfahren als wäßriges Alkalimetallhydroxid Natronlauge oder Kalilauge, vorzugsweise in einer Menge von 3 bis 10 Gew.-% (gerechnet als Natriumhydroxid oder Kaliumhydroxid), bezogen auf die Gesamtmenge an Paraffin-Dispersion und wäßriger Alkalimetallhydroxidlösung, insbesondere in einer Menge von 4 bis 8 Gew.-% Natriumhydroxid oder Kaliumhydroxid.

Die Konzentration der Natronlauge oder Kalilauge ist üblicherweise nicht kritisch.

Es ist bevorzugt, eine wäßrige Mischung von Paraffin-Dispersion und Alkalilauge einzusetzen.

Die beim erfindungsgemäßen Verfahren verwendete Paraffin-Dispersion enthält Paraffin mit einem Schmelzpunkt von vorzugsweise 50 bis 70°C, insbesondere 52 bis 58°C. Man verwendet eine handelsübliche wäßrige Paraffin-Dispersion, die 40- bis 65-prozentig an Feststoff im Handel erhältlich ist. Zur Herstellung eines Formtrennmittels vermischt man diese wäßrige Paraffin-Dispersion mit der entsprechenden menge an wäßrigem Alkalimetallhydroxid.

Das nachstehende Beispiel dient zur weiteren Erläuterung der Erfindung.

### Beispiel

Man stellt ein Formtrennmittel her, indem man die folgenden Bestandteile mischt:
- 100 g: wäßrige Paraffin-Dispersion Mobilcer® 739 (Mobil AG, Hamburg) 65 gew.-%ig
- 100 g: Kalilauge 10 gew.-%ig
- 25 g: Wasser.

5,5 kg Holzspäne werden in einer Mischvorrichtung mit 275 g Roh-MDI beharzt und mit 110 g einer 50 %igen Paraffin-Dispersion hydrophobiert. Aus dem behandelten Spanmaterial wird eine Matte geformt, die vor dem Verpressen in der Heißpresse mit Zulageblechen bedeckt wird. Auf diese Zulagebleche werden zuvor pro qm 25 bis 50 g des obigen Formtrennmittels durch Versprühen in einer Druckdüse verteilt. Der auf 18 mm verdichtete Spankuchen läßt sich nach einer Preßzeit von 130 Sekunden (= 7,2 s/mm) ohne Einwirkung mechanischer kraft zum Preßblech trennen.

Es wurde die Trennwirkung verschiedener Holzformteile im Labormaßstab untersucht. Die jeweils eingesetzten Trennlösungen und die Ergebnisse sind in der nachstehenden Tabelle zusammengefaßt:

**Tabelle**

| Trennlösung | Auftragsmenge g/m² | Trennwirkung |
|---|---|---|
| Mobilcer 739 (65 gew.-%ige Paraffin-Dispersion) | 50 | 3 |
| Mobilcer 736 (50 gew.-%ige Paraffin-Dispersion) | 50 | 3 |
| ohne Trennlösung | - | 4 |
| gemäß Beispiel | 25 | 1 |
| gemäß Beispiel | 50 | 1 |
| Schmierseifelösung 15 gew.-%ig, wäßrig | 50 | 2 |
| gemäß Beispiel aber mit K₂CO₃ anstelle von KOH | 50 | 3 |
| gemäß Beispiel aber mit Ba(OH)₂ anstelle von KOH | 50 | 3 |
| gemäß Beispiel aber mit Ca(OH)₂ anstelle von KOH | 50 | 4 |
| gemäß Beispiel mit halber Menge KOH | 25 | 2 |
| gemäß Beispiel mit halber Menge KOH | 50 | 1 |
| gemäß Beispiel aber mit Ammoniak anstelle von KOH (5 %ig) | 50 | 4 |

Die Noten bei der Beurteilung der Trennwirkung in der ob50igen Tabelle sind folgendermaßen definiert:
1. sehr gute Trennwirkung Formling und Blech trennen sich ohne mechanischen Kraftaufwand;
2. gute Trennwirkung
   Formling trennt sich mit geringem Kraftaufwand (leichter Stoß);
3. Trennung nur noch mit starkem Kraftaufwand möglich; kleine Holzteile haften noch am Blech;
4. keine Trennung
   Verbindung kann nur durch Zerstörung des Formteils gelöst werden.

Die Ergebnisse der obigen Tabelle zeigen, daß die erfindungsgemäße Kombination aus wäßriger Paraffin-Dispersion und wäßrigem Alkalimetallhydroxid zu einer überraschenden, sprunghaften Erhöhung der Trennwirkung im Vergleich zu den anderen Trennmitteln führt.

## Patentansprüche

1. Verfahren zum rückstandsfreien Ablösen von Isocyanat-Holzgemisch-Formkörpern von den Preßplatten oder -formen einer Preßvorrichtung unter Verwendung einer wäßrigen Paraffin-Dispersion, dadurch gekennzeichnet, daß man vor dem Verpressen des Isocyanat-Holzgemischs die Preßplatten und -formen und/oder die Oberfläche des Preßlings mit der Paraffin-Dispersion und wäßrigem Alkalimetallhydroxid behandelt.

2. Verfahren nach Anspruch 1, dadurch gekennzeichnet, daß man als wäßriges Alkalimetallhydroxid Natronlauge und/oder Kalilauge verwendet.

3. Verfahren nach Anspruch 1 oder 2, dadurch gekennzeichnet, daß man eine wäßrige Mischung von Paraffin-Dispersion und Alkalimetallhydroxid einsetzt.

4. Verfahren nach Anspruch 3, dadurch gekennzeichnet, daß die wäßrige Mischung 3 bis 10 Gew.-% Alkalimetallhydroxid und 25 bis 60 Gew.-% Paraffin, jeweils bezogen auf das Gesamtgewicht der Mischung, enthält.

5. Verfahren nach Anspruch 4, dadurch gekennzeichnet, daß die wäßrige Mischung 4 bis 8 Gew.-% NaOH oder KOH enthält.

6. Formtrennmittel in Form einer wäßrigen Trennlösung, enthaltend 3 bis 10 Gew.-% Alkalimetallhydroxid und 25 bis 60 Gew.-% dispergiertes Paraffin mit Schmelzpunkt von 50 bis 70°C, jeweils bezogen auf das Gesamtgewicht der Trennlösung.

7. Formtrennmittel nach Anspruch 6, enthaltend 4 bis 8 Gew.-% NaOH und/oder KOH.

## Claims

1. A process for the residue-free detachment of isocyanate-wood composite moldings from the pressing plates or molds of a press using an agueous paraffin dispersion, wherein, prior to the pressing of the isocyanate-wood mixture, the pressing plates and molds and/or the surface of the pressed body is treated with the paraffin dispersion and agueous alkali metal hydroxide.

2. A process as claimed in claim 1, wherein the agueous alkali metal hydroxide used is sodium hydroxide solution and/or potassium hydroxide solution.

3. A process as claimed in claim 1 or 2, wherein an aqueous mixture of paraffin dispersion and alkali metal hydroxide is used.

4. A process as claimed in claim 3, wherein the agueous mixture contains from 3 to 10% by weight of alkali metal hydroxide and from 25 to 60% by weight of paraffin, in each case based on the total weight of the mixture.

5. A process as claimed in claim 4, wherein the agueous mixture contains from 4 to 8% by weight of NaOH or KOH.

6. A mold release composition in the form of an agueous release solution containing from 3 to 10% by weight of alkali metal hydroxide and from 25 to 60% by weight of dispersed paraffin having a melting point of from 50 to 70°C, in each case based on the total weight of the release solution.

7. A mold release composition as claimed in claim 6 containing from 4 to 8% by weight of NaOH and/or KOH.

## Revendications

1. Procédé pour détacher, sans laisser de résidus, des corps moulés en mélange de bois et d'isocyanate de plaques de pressage ou de matrices d'un dispositif de pressage, avec utilisation d'une dispersion aqueuse de paraffine, caractérise en ce qu'avant le pressage du mélange de bois et d'isocyanate, on traite les plaques de pressage et les matrices et/ou la surface de l'ébauche par la dispersion de paraffine et un hydroxyde de métal alcalin aqueux.

2. Procédé selon la revendication 1, caractérisé en ce que l'on utilise de la soude et/ou de la potasse comme hydroxyde de métal alcalin aqueux.

3. Procédé selon la revendication 1 ou 2, caractérisé en ce que l'on utilise un mélange aqueux de dispersion de paraffine et d'hydroxyde de métal alcalin.

4. Procédé selon la revendication 3, caractérisé en ce que le mélange aqueux contient de 3 à 10% en poids d'hydroxyde de métal alcalin et de 25 à 60% en poids de paraffine, par rapport au poids total du mélange.

5. Procédé selon la revendication 4, caractérisé en ce que le mélange aqueux contient de 4 à 8% en poids de NaOH ou de KOH.

6. Agent de démoulage sous forme d'une solution aqueuse de séparation, contenant de 3 à 10% en poids d'hydroxyde de métal alcalin et de 25 à 60% en poids de paraffine mise en dispersion, ayant un point de fusion de 50 à 70°C, par rapport au poids total de la solution de séparation.

7. Agent de démoulage selon la revendication 6, contenant de 4 à 8% en poids de NaOH et/ou de KOH.
